Europäisches Patentamt

European Patent Office

Office européen des brevets

(19)

(11) Veröffentlichungsnummer: **0 363 396 B1**

# (12) EUROPÄISCHE PATENTSCHRIFT

(45) Veröffentlichungstag der Patentschrift :
21.11.91 Patentblatt 91/47

(51) Int. Cl.⁵ : **G01C 21/04**

(21) Anmeldenummer : **88904498.8**

(22) Anmeldetag : **04.06.88**

(86) Internationale Anmeldenummer :
**PCT/DE88/00332**

(87) Internationale Veröffentlichungsnummer :
**WO 88/09916 15.12.88 Gazette 88/27**

(54) **VERFAHREN UND VORRICHTUNG ZUR POSITIONSBESTIMMUNG EINES LANDFAHRZEUGS.**

(30) Priorität : 06.06.87 DE 3718996

(43) Veröffentlichungstag der Anmeldung :
18.04.90 Patentblatt 90/16

(45) Bekanntmachung des Hinweises auf die
Patenterteilung :
21.11.91 Patentblatt 91/47

(84) Benannte Vertragsstaaten :
DE FR GB IT

(56) Entgegenhaltungen :
FR-A- 2 179 709
FR-A- 2 274 094
GB-A- 2 139 794

(73) Patentinhaber : ROBERT BOSCH GmbH
Postfach 10 60 50
W-7000 Stuttgart 10 (DE)

(72) Erfinder : NEUKIRCHNER, Ernst-Peter
Sandkamp 16
W-3200 Hildesheim (DE)
Erfinder : SCHLÖGL, Dietmar
Lange Halbe 19
W-3226 Sibbesse (DE)

EP 0 363 396 B1

**Beschreibung**

Die Erfindung betrifft ein Verfahren zur Positionsbestimmung eines Landfahrzeugs nach dem Oberbegriff des Anspruchs 1.

Unter der Bezeichnung EVA (Elektronischer Verkehrslotze für Autofahrer) ist ein System entwickelt worden, das aufgrund des vorhandenen Straßennetzes, der Momentanposition des Fahrzeugs sowie der Start- und Zielangaben Empfehlungen für einen optimalen Fahrtweg erteilt. Die Zuverlässigkeit dieses Systems hängt unter anderem von der Genauigkeit ab, mit der die Momentanpositon des Fahrzeugs bestimmt werden kann.

Verfahren und Vorrichtungen zur Positionsbestimmung von Landfahrzeugen, die nur Fahrdaten wie z.B. Wegstrecken und Fahrtrichtung durch Koppelortung erfassen und auswerten, erleiden nach längerer Fahrtstrecke einen Ortungsverlust, der zu einer fehlerhaften Empfehlung führen kann. Dieser Ortungsverlust läßt sich durch wiederholte Korrektur in Form eines Abgleichs mit Daten eines gepeicherten, digitalisierten Straßennetzes in solchen Grenzen halten, daß die Zuverlässigkeit der Empfehlung nicht beeinträchtigt wird. Bei der Durchführung des Abgleichs können aber Probleme auftreten, die z.B. in der Dichte des Straßennetzes, des begrenzten Speicherplatzes der im Fahrzeug vorhandenen Rechneranordnung oder der vom Rechner benötigten Rechenzeit begründet liegen.

Ist das Straßennetz sehr dicht und wird der Abgleich aufgrund der benötigten Rechenzeit nur in größeren räumlichen oder zeitlichen Abständen vorgenommen, so kann die Ortungsungenauigkeit inzwischen so angewachsen sein, daß die aus den Fahrdaten ermittelte Position zwar dem Straßennetz zuzuordnen ist, diese aber von der tatsächlichen Position abweicht und der Abgleich dann zu einer falschen Straße hin erfolgt. Eine Beschränkung auf ein ausgedünntes Straßennetz ist nicht erwünscht, da vom System verlangt wird, daß Empfehlungen zwischen beliebigen Start- und zielpositionen erteilt werden können. Somit muß das Gebiet der Größenordnung eines Bundeslandes oder des gesamten Staatsgebiets der Bundesrepublik Deutschland berücksichtigt werden können.

Die FR-A- 2 179 709 zeigt ein Überwachungssystem für Fahrzeuge, wobei eine Landkarte ein engmaschiges Gitter aufweist und das Gitter so klein gewählt ist, daß in jeder Masche lediglich ein Straßenstück liegen kann. Liegt ein solches Straßenstück in der Masche, wird diese Masche mit einer logischen 1 definiert.

Die Erfindung ist im Patentanspruch 1 (verfahren) und im Patentanspruch 8 (Vorrichtung) gekennzeichnet.

Durch die Erfindung wird erreicht, daß bei einer Positionsbestimmung von Landfahrzeugen, die sich zur Korrektur auf Daten eines gespeicherten digitalisierten Straßennetzes stützt, nicht das gesamte Straßennetz für die Standortbestimmung herangezogen werden muß. Vielmehr wird das digitalisierte Straßennetz in Maschen aufgeteilt, wobei sich in jeder Masche mehrere Straßenstücke befinden. Die Fahrzeugposition wird nun durch Koppelnavigation und durch Vergleich mit dem digitalisierten Straßennetz dieser Masche und der angrenzenden Maschen ermittelt.

Die Erfindung geht dabei von der Überlegung aus, daß ein Ortungsverlust bei der Auswertung von Fahrdaten nur allmählich mit zunehmender Wegstrecke wächst und daher bei kurz hintereinander folgenden Korrekturen in Grenzen gehalten werden kann. Infolgedessen spielen auch nur die in der Nähe der errechneten Position liegenden Straßen für den Abgleich eine Rolle. Da die relevanten Straßen beim Durchfahren des Straßennetzes ständig wechseln, wird ein Kriterium benötigt, welche Straßen für den Abgleich herangezogen werden sollen.

Die Erfindung schafft dieses Kriterium durch Überspannen des digitalisierten Straßennetzes mit einem Gitter, so daß das Straßennetz nunmehr in Maschen aufgelöst wird und eindeutig definiert werden kann, ob Straßen innerhalb des relevanten Gebietes liegen oder nicht. Um auch beim Übergang von einer Masche zur anderen noch einen wirksamen Abgleich durchführen zu können, wird das relevante Gebiet aber nicht durch eine einzige Masche begrenzt. Vielmehr wird diejenige Masche, innerhalb der die aus den Fahrdaten errechnete Position liegt, zum Mittelfeld eines größeren Gebietes gemacht, in welchem die Straßen ebenfalls zum Abgleich herangezogen werden. Daher führt es auch nicht zu Fehlern, wenn die tatsächliche Position nicht in der definierten Masche sondern in einer benachbarten Masche liegt.

Durch die Bildung eines die errechnete Position ungefähr als Mittelpunkt bildenden Gebietes, das mit der verändernden Position des Fahrzeugs mitgleitet, wird die für den Abgleich benötigte Datenmenge etwa konstant und auf einem verhältnismäßig niedrigen Niveau gehalten, so daß der Abgleich in ausreichend kurzer Zeit durchgeführt werden kann. Die Auswahl der Straßen, auf die die errechnete Position schließlich abgeglichen wird, erfolgt nach der als am wahrscheinlichsten angesehenen Straße.

Dazu werden gemäß einer Weiterbildung die relevanten Straßen, also die in der näheren Umgebung der Masche, in der die errechnete Position liegt, liegenden Straßen unterschiedlich gewichtet. Die Wichtung kann z.B. nach der Nähe, der Richtungsübereinstimmung oder einer Kombination aus beiden erfolgen. Nach einer Reihe von Wichtungen oder Bewertungen, die vorzugsweise aus einer Summation von Einzelwichtungen vorgenommen werden, bis ein Schwellwert erreicht oder überschritten wird, wird dann die Position in diejenige Straße korrigiert, die die höchste Wichtung erhalten hat.

Da die Ortungsungenauigkeit durch die Korrektur praktisch wieder völlig beseitigt ist, kann die Wichtung anschließend neu beginnen, so daß auch hierdurch der zu verarbeitende Datenumfang in Grenzen gehalten wird und eine ausreichend hohe Rechengeschwindigkeit erhalten werden kann.

Ein besonders benutzerfreundlicher Vorteil des Verfahrens besteht darin, daß aufgrund der Eigenkorrektur das digitale Straßennetz nur die für den öffentlichen Verkehr zugelassenen Straßen enthalten muß. Kurze, nicht öffentliche Straßen, z.B. Hofeinfahrten, Durchfahrten, Tankstelleneinfahrten oder Parkplätze brauchen dagegen nicht erfaßt zu werden. Das Verfahren ist vielmehr in der Lage, nach Rückkehr auf eine der im digitalisierten Straßennetz gespeicherten Straßen die Position des Fahrzeugs wieder dieser Straße zuzuordnen. Auch ist eine exakte Eingabe des Startpunktes nicht erforderlich, so daß diese sehr überschlägig durchgeführt werden kann und auch bereits in der Garage oder auf einem Parkplatz, der nicht im digitalisierten Straßennetz gespeichert ist, vorgenommen werden kann.

Der Erfindung liegt die Aufgabe zugrunde ein Verfahren und eine Vorrichtung zu schaffen, was auch bei umfangreichen detaillierten digitalisierten Straßennetzen einen zuverlässigen und schnellen Abgleich der aus den Fahrdaten errechneten Position auf das Straßennetz ermöglicht.

Während der erste Speicher der Vorrichtung das digitalisierte Straßennetz umfaßt, ist im dem zweiten Speicher ein Gitter gespeichert, mit dem das Straßennetz überzogen wird. Der Rechner erhält so ein in eine Vielzahl von Maschen aufgelöstes Straßennetz und kann aus dem gesamten Straßennetz eine Auswahl treffen, welche Straßen für den Abgleich der aus den Fahrdaten gewonnenen Position auf das digitalisierte Straßennetz herangezogen werden sollen. Der Umfang der zu berücksichtigenden Daten läßt sich so beschränken und die Positionsbestimmung und -korrektur können in ausreichend kurzer Zeit durchgeführt werden.

Weiterbildungen und vorteilhafte Ausführungsformen der Erfindung ergeben sich aus den abhängigen Ansprüchen, der Beschreibung und der Zeichnung, die die Erfindung näher erläutern.

In der Zeichnung zeigen:

Fig. 1 einen Ausschnitt aus einem Straßennetz, das durch Überziehen mit einem Gitter in Maschen aufgelöst ist,

Fig. 2 ein Flußdiagramm zur Verdeutlichung des Verfahrensablaufs,

Fig. 3 eine vektorielle Darstellung zur Verdeutlichung des Abgleichvorganges und

Fig. 4 ein Blockschaltbild einer erfindungsgemäßen Vorrichtung.

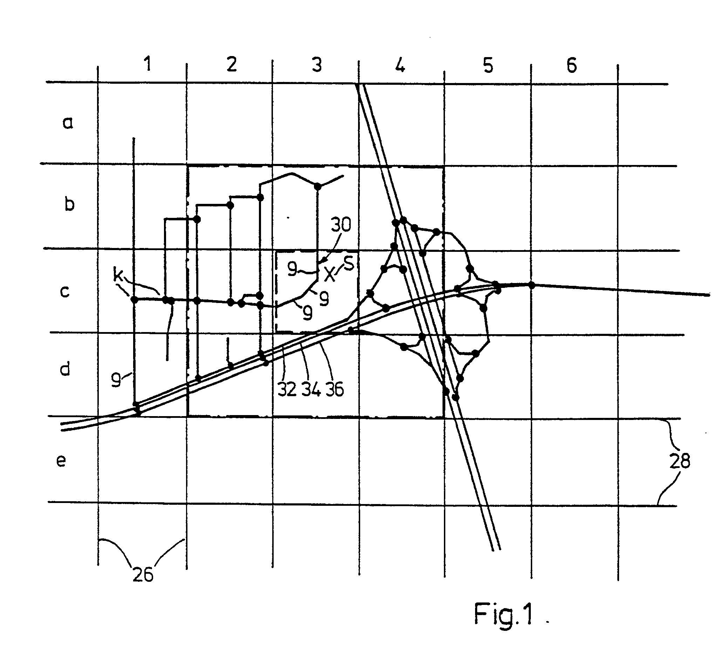

Bei dem in Fig. 1 dargestellten Straßennetz sind die Straßen als Graphen wiedergegeben, dessen Knoten die Kreuzungen k und dessen Kanten die Straßenstücke g zwischen zwei Kreuzungen darstellen. Bei gekrümmten Straßenstücken werden die Kanten so aus geraden Stücken g zusammengesetzt, daß Abweichungen des Graphen vom tatsächlichen Straßenverlauf bestimmte Grenzwerte, z.B. 10 Meter, 15°, nicht überschreiten. Der Graph ist, mit einem Gitter aus senkrechten Linien 26 und waagerechten Linien 28 überspannt. Die Schrittweite des Gitters, also der Abstand zwischen zwei Gitterlinien 26 oder 28 hängt von der Straßendichte, oder graphentheoretisch ausgedrückt, von der Kantendichte ab. Unter Straßendichte wird die Anzahl der Straßen pro Flächeneinheit verstanden. Die Schrittweite kann zwischen 125 Meter im Innenstadtbereich und ca. 1000 Meter im überörtlichen Netz variieren. Sie wird vorzugsweise für jeden Bereich so gewählt, daß die Anzahl der eine Masche berührenden Straßen den Wert 10 nicht wesentlich übersteigt.

Bei der Auflösung des Straßennetzes in Maschen wird zu jeder Masche eine Liste angelegt, welche die Nummern der Straßen enthält, die vollständig oder teilweise innerhalb der jeweiligen Masche gelegen sind. So enthält die Masche mit den Koordinaten c Ziffer 3 eine Liste der Straßen 30, 32, 34 und 36. Die Masche mit den Koordinaten d Ziffer 3 enthält nur die Straßen 32, 34 und 36.

Die für den Abgleich relevanten Straßen werden nicht nur durch diejenige Masche festgelegt, innerhalb der sich die Momentanposition des Fahrzeugs befindet, in Fig. 1 handelt es sich dabei um den Startpunkt S in der Masche mit den Koordinaten c Ziffer 3, vielmehr werden auch die in der Umgebung der ausgewählten Masche befindlichen Straßen berücksichtigt. Die Um- gebung wird hier durch diejenigen Maschen gebildet, welche an die Masche, in der sich die Momentanposition befindet, angrenzen. Es handelt sich hierbei also um acht weitere Maschen mit den Koordinaten b2, b3, b4, c2, c4, d2, d3 und d4. Das Gebiet ist graphisch noch durch eine strichpunktierte Umrahmung hervorgehoben.

Erreicht die Momentanposition eine andere Masche, z.B. diejenige mit den Koordinaten c2, so wird die Umgebung nun zusätzlich durch die Maschen mit den Koordinaten b1, c1 und d1 gebildet, während die Maschen mit den Koordinaten b4, c4 und d4 entfallen. Auf diese Weise ergibt sich selbst bei fehlerhafter Errechnung der Momentanposition des Fahrzeugs noch ein ausreichend großes Randgebiet, aus dem Straßen für den Abgleich herangezogen werden können.

Das Verfahren zur Positionsbestimmung läuft im wesentlichen wie folgt ab. Zuerst wird eine Startposition eingegeben und diejenige Masche ermittelt, innerhalb der die Startposition liegt. Von dieser Startposition aus erfolgt dann die Berechnung der Momentanposition. Hierzu dienen zunächst die von einem Fahrdatengeber übermittelten Fahrdaten, aus denen eine Momentanposition bestimmt wird. Diese Momentanposition weicht aber mit zunehmender Fahrtstrecke von der tatsächlichen Position ab. Es tritt also ein Ortungsfehler auf.

Um den Ortungsfehler zu beseitigen, wird die Momentanposition in vorgegebenen Abständen mit dem gespeicherten Straßennetz abgeglichen und in eine Position korrigiert, die auf einer der Straßen liegt.

Die für den Abgleich herangezogenen Straßen befinden sich in der näheren Umgebung der Momentanposition. Vorzugsweise handelt es sich um diejenigen Straßen, die innerhalb der Masche, in der die Momentanposition liegt, gelegen sind und um die Straßen, die in den die vorerwähnte Masche umgebenden Maschen gelegen sind.

Ferner werden solche Straßen berücksichtigt, die eine oder mehrere dieser Maschen berühren.

Die relevanten Straßen werden danach gewichtet, mit welcher Wahrscheinlichkeit die errechnete Momentanposition auf ihnen liegen kann. Die Straße mit der höchsten Wichtung wird schließlich ausgewählt, die Momentanposition so korrigiert, daß sie auf der Straße zu liegen kommt und diese neue Position nun als Ausgang für die weitere Positionsbestimmung verwendet.

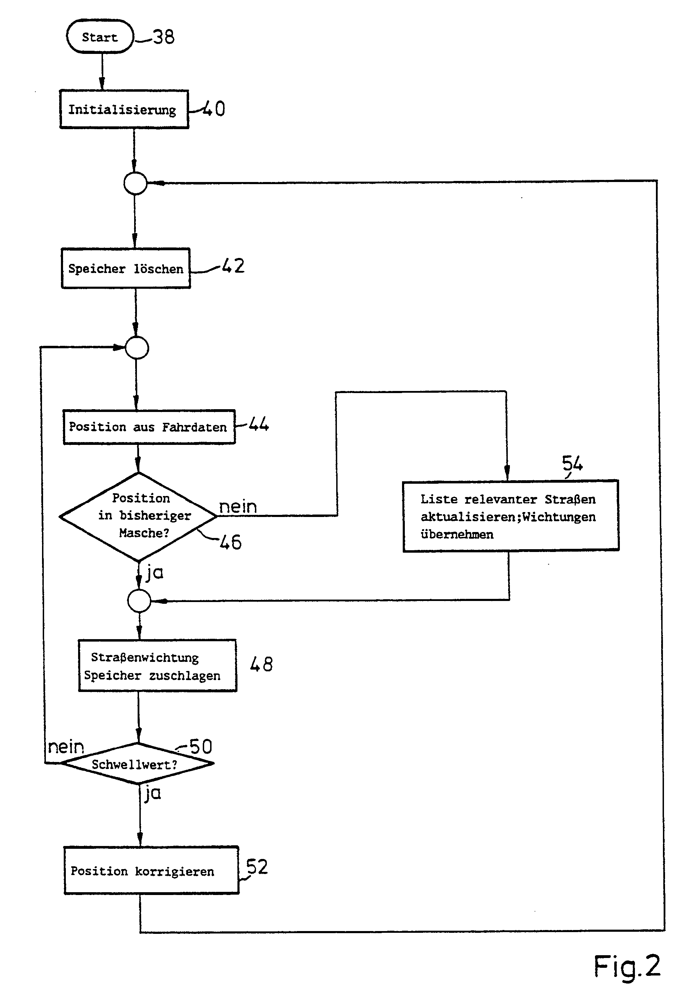

Zur Erläuterung eines bevorzugten Verfahrensablaufs wird auf das in Fig. 2 dargestellte Flußdiagramm Bezug genommen. Nach dem Start in 38 erfolgt eine Initialisierung in 40. Darunter wird eine erstmalige Eingabe der Startposition verstanden. Da in dieser Phase noch kein Ortungsfehler vorliegt, kann das weitere Verfahren mit einem Löschen oder Rücksetzen der Bewertungsspeicher für die Wichtung der Straßen eingeleitet werden. Dies geschieht in 42. Während des Fahrens wird in kurzen Abständen, maximal 10 Meter, eine Positionsberechnung aus Fahrdaten durchgeführt. Dies erfolgt in 44. Die Positionsberechnung erfolgt vorzugsweise nach dem Prinzip der Koppelortung, bei der sowohl die durchfahrene Wegstrecke als auch die Fahrtrichtung berücksichtigt werden. Ergänzend kann auch noch eine Richtungsbestimmung mittels Kompaß herangezogen werden.

In 46 wird entschieden, ob die errechnete Position in der bisherigen Masche liegt. Bei einem erstmaligen Durchlaufen des Verfahrens ist die bisherige Masche diejenige, in der die Startposition liegt. Bei jedem weiteren Durchlauf wird immer auf die vorhergehende Momentanposition Bezug genommen.

Wird die Entscheidung bejaht, so werden anschließend in 48 die Straßen entsprechend der Wahrscheinlichkeit, mit der die Momentanposition auf einer von ihnen liegen könnte, gewichtet. Die Wichtung kann z.B. so erfolgen, daß der Abstand der berechneten Momentanposition mit den einzelnen Straßen verglichen wird und den Straßen gestaffelt nach dem Abstand Bewertungsziffern zugeordnet werden. Die Straße mit dem kleinsten Abstand erhält die höchste, die mit dem größten Abstand die kleinste Bewertungsziffer. Entsprechendes erfolgt dann zwischen der Fahrtrichtung und der Richtung der Straßen. Die Straße, deren Richtung mit der Fahrtrichtung am ehesten übereinstimmt, erhält die Höchstbewertungsziffer, diejenige, die mit der Fahrtrichtung am wenigsten übereinstimmt, erhält die niedrigste Bewertungsziffer. Die Bewertungen zwischen Abstand und Richtung können auch kombiniert werden.

Als besonders zweckmäßig hat sich eine Wichtung nach folgendem Algorithmus ergeben: Bewertung gleich

$$w = \frac{1}{|\varphi_g - \varphi_f|} \times \frac{1}{a}$$

Hierbei ist $w$ die Wichtung oder Bewertung, $\varphi_g$ die Richtung eines geraden Stückes der Straße, $\varphi_f$ die Fahrtrichtung und $a$ der Abstand zwischen der berechneten Position und der Straße.

Nachdem in 48 die Wichtungen der Straßen berechnet sind, werden sie einem Bewertungsspeicher zugeschlagen. Dieser enthält Speicherplätze für die Wichtungen jeder der relevanten Straßen. Bei jeder Neuberechnung werden die Wichtungen aufaddiert. Nach der Berechnung wird in 50 entschieden, ob ein Schwellwert erreicht ist. Ist dies der Fall, wird in 52 die errechnete Position in die Straße mit der höchsten Wichtung korrigiert. Anschließend wird der Verfahrensablauf mit 42 fortgesetzt.

Ist der Schwelluert in 50 nicht erreicht, wird der Verfahrensablauf mit 44 fortgesetzt. Liegt die errechnete Momentanposition nicht in der bisherigen Masche, so wird von 46 nach 54 verzweigt und die Liste der relevanten Straßen, die gewichtet werden sollen, aktualisiert. Die neu hinzukommenden Straßen werden also erstmals gewichtet, die Wichtungen der nicht mehr berücksichtigten Straßen gelöscht und die Wichtungen der Straßen, die weiterhin berücksichtigt werden, übernommen. Anschließend wird mit dem Verfahrensschritt in 48 fortgesetzt.

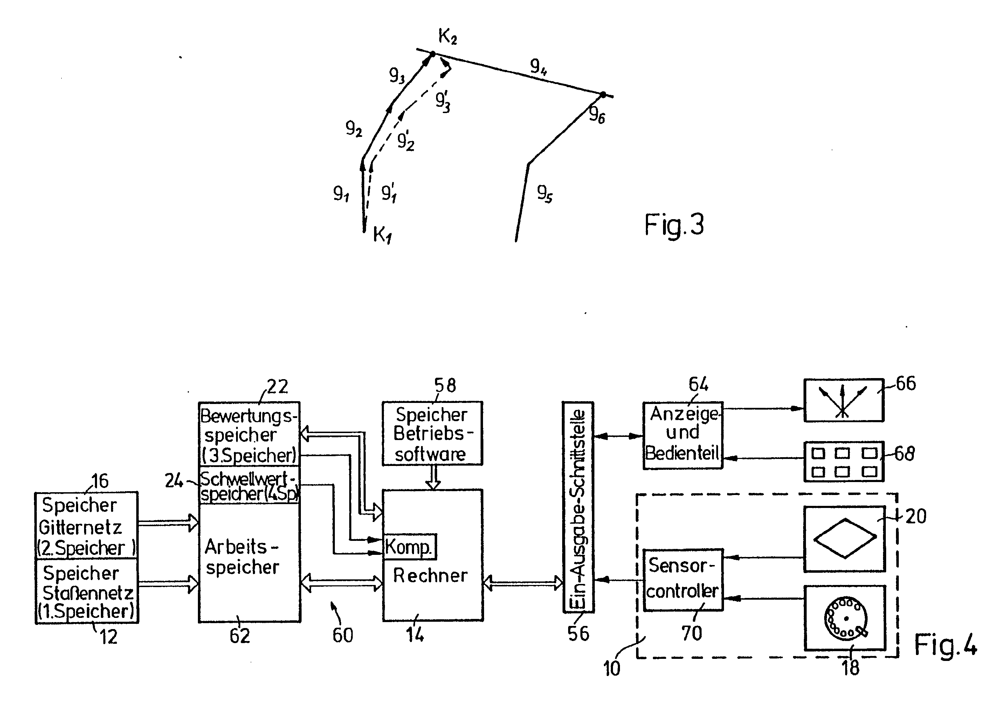

Zur Veranschaulichung der Wichtung wird auf die Vektordarstellung in Fig. 3 Bezug genommen. Ein Fahrzeug soll von der Kreuzung k1 zur Kreuzung k2 fahren. Dabei werden die geraden Stücke g1, g2 und g3 befahren. Die Positionsbestimmung aufgrund der Fahrdaten, welche mit Fehlern behaftet sein soll, ergibt eine virtuelle Fahrstrecke aus den Geraden g1', g2' und g3'. Nach jedem geraden Stück g erfolgt eine Berechnung der Momentanposition und eine Wichtung der insgesamt berücksichtigten Straßen g1 - g6. Wird die Wichtung nur nach dem Abstand oder nur nach der Richtung durchgeführt, so könnte z.B. das Geradenstück g4 wegen des geringen Abstands oder die Geradenstücke g5 und g6 wegen der übereinstimmenden Richtung hohe Wichtungen erhalten. Die Kombination beider Kriterien führt aber dazu, daß nach Durchfahren des virtuellen Geradenstücks g3' das Ende der Gerade g3 als die wahrscheinlichste Position erscheint und die Momentanposition somit in diese Position korrigiert wird.

Fig. 4 zeigt schließlich noch ein Blockschaltbild der erfindungsgemäßen Vorrichtung. Diese umfaßt einen Rechner 14, dem über eine Ein- Ausgabe-Schnittstelle 56 Fahrdaten eines Fahrdatengebers 10 zugeführt werden, sowie einen ersten Speicher 12 für ein digitalisiertes Straßennetz und einen zweiten Speicher 16 für ein Gitternetz. Mit dem Rechner 14 sind ferner ein Speicher 58 für die Betriebssoftware und eine Schreib-Lese-Speicheranordnung 60 verbunden. Die Schreib-Lese-Speicheranordnung 60 umfaßt einen Arbeitsspeicher 62, einen dritten Speicher 22 für eine Bewertung oder Wichtung der Straßen und einen vierten Speicher 24 für einen Schwellwert. Über die Ein- Ausgabe-Schnittstelle 56 ist der Rechner ferner noch mit einem Anzeige- und Bedienteil 64 verbunden, das ein Display 66 und eine Eingabetastatur 68 aufweist. Der Fahrdatengeber 10 umfaßt im einzelnen einen Sensor-Controller 70 sowie Radsensoren 18 und einen Kompaß 20.

Über die Eingabetastatur 68 wird zunächst die Startposition in den Rechner 14 eingegeben. Der Fahrdatengeber 10 liefert während der Fahrt in vorgegebenen Abständen Fahrdaten, die von den Radsensoren 18 und gegebenenfalls von dem Kompaß 20 stammen und im Rechner 14 nach dem Prinzip der Koppelortung ausgewertet werden. Aus den Fahrdaten wird die Momentanposition errechnet.

Nun wird das im ersten Speicher gespeicherte Straßennetz und das im zweiten Speicher gespeicherte Gitternetz abschnittsweise in den Arbeitsspeicher überführt, bis die Masche gefunden ist, innerhalb der die Momentanposition liegt. Diese Masche, die an diese Masche angrenzenden Maschen und die innerhalb dieses Gebietes liegenden Straßen werden dann in den Arbeitsspeicher 62 kopiert. Bei jeder Berechnung der Momentanposition wird auch eine Wichtung der relevanten, d.h. in der Masche, in der die Momentanposition liegt, und in den angrenzenden Maschen gelegenen Straßen sowie die die Maschen berührenden Straßen vorgenommen. Das Ergebnis dieser Wichtung wird für jede Straße gesondert in den dritten Speicher 22 überführt und den dort bereits vorhandenen Werten zugeschlagen.

Nach jedem derartigen Vorgang erfolgt ein Vergleich zwischen den Wichtungen und einer in dem vierten Speicher 24 gespeicherten Schwellwert. Dies geschieht in einem Komparator, wobei der Komparator diskret vorhanden sein oder durch entsprechende Steuerung des Rechners 14 realisiert sein kann. Ist der Schwellwert erreicht oder überschritten, nimmt der Rechner 14 einen Abgleich der Momentanposition auf die Position der am höchsten gewichteten Straße vor und löscht den dritten Speicher 22.

Anschließend beginnt der Vorgang von neuem, bis der Schwellwert von einem der die Wichtung der Straßen bestimmenden Werte ein weiteres Mal überschritten ist. Auf diese Weise wird ein inzwischen aufgetretener Ortungsverlust immer wieder beseitigt.

Aufgrund der mit der Erfindung erreichten Reduzierung der Datenmenge, die für diese Rechenvorgänge aus-reicht, wird eine sehr schnelle Berechnung ermöglicht. Dies ist besonders bei einem dichten Straßennetz in der Großstadt erforderlich. Stellt der Rechner fest, daß sich das Fahrzeug einer Kreuzung oder Abzweigung nähert, an der die Fahrtrichtung geändert werden muß, so gibt er eine entsprechende Empfehlung über das Display 66 ab. Diese Empfehlungen werden so lange gegeben, bis die Zielposition erreicht ist oder eine neue Zielposition eingegeben wird.

## Patentansprüche

1. Verfahren zur Positionsbestimmung eines Landfahrzeuges durch Erfassung und Auswertung von Fahrdaten wie Fahrweg, Fahrtrichtung und anschließender Korrektur der aus den Fahrdaten errechneten Position durch Vergleich mit möglichen Positionen eines gespeicherten digitalisierten Straßennetzes, wobei das Straßennetz in Form von Straßenstücken digitalisiert ist, wobei das digitalisierte Straßennetz gitterförmig in Maschen aufgeteilt ist, dadurch gekennzeichnet, daß in jeder Masche des Gitters eine bestimmte Anzahl von mehreren Straßenstücken nicht überschritten wird, daß beim Vergleich der aus den Fahrdaten errechneten Position mit den Straßen nur die Straßen berücksichtigt werden, die in die Masche oder in eine der angrenzenden Maschen fallen, in der die errechnete Position des Landfahrzeuges liegt.

2. Verfahren nach Anspruch 1, dadurch gekennzeichnet, daß beim Vergleich der aus den Fahrdaten errechneten Position mit den Straßenstücken für jedes Straßenstück eine Gewichtung vorgenommen wird.

3. Verfahren nach Anspruch 2, dadurch gekennzeichnet, daß die Gewichtung durch den bestand der errechneten Position von jedem einzelnen Straßenstück und/oder durch den Vergleich des Straßenwinkels und/oder der gegebenen Fahrtrichtung bestimmt wird.

4. Verfahren nach Anspruch 2 oder 3, dadurch gekennzeichnet, daß die Gewichtung in regelmäßigen Abständen durchgeführt wird und die Gewichtungen addiert werden.

5. Verfahren nach einem der Ansprüche 2 bis 4, dadurch gekennzeichnet, daß die errechnete Position auf das Straßenstück korrigiert wird, das die höchste Gewichtung aufweist.

6. Verfahren nach einem der Ansprüche 2 bis 4, dadurch gekennzeichnet, daß eine Korrektur der errechneten Position auf ein Straßenstück nur vorgenommen wird, wenn die Gewichtung des Straßenstückes einen vorgegebenen Wert übersteigt.

7. Verfahren nach einem der vorhergehenden Ansprüce, dadurch gekennzeichnet, daß in Abhängigkeit von der Zahl der Straßen (Dichte der Straßen) die Größe der Masche bestimmt wird.

8. Vorrichtung zur Durchführung eines Verfahren nach einem der Ansprüche 1 - 7 mit einem Fahrdatengeber (10), einem ersten Speicher (12) für ein digitalisiertes Straßennetz sowie einem Rechner (14) zur Auswertung der Fahrdaten und anschließender Korrektur der aus den Fahrdaten errechneten Position durch Abgleich mit Daten des gespeicherten digitalisierten Straßennetzes, dadurch gekennzeichnet, daß neben dem ersten Speicher (12) für das digitalisierte Straßennetz ein weiterer Speicher (16) vorgesehen ist, der für jede Masche des Gitters eine Liste der Nummern der Straßen des Straßennetzes enthält, die vollständig oder teilweise innerhalb der jeweiligen Maschen gelegen sind.

9. Vorrichtung nach Anspruch 8, dadurch gekennzeichnet, daß der Fahrdatengeber (10) eine Radsensoranordnung (18) zur Erfassung von Wegstrecken und Richtungsdaten und gegebenenfalls einen kompaß (20) zur Erfassung von Richtungsdaten umfaßt.

10. Vorrichtung nach einem der Ansprüche 8 oder 9, dadurch gekennzeichnet, daß ein dritter Speicher (22) zur Speicherung der Gewichtungen vorgesehen ist.

11. Vorrichtung nach einem der Ansprüche 8 - 10, dadurch gekennzeichnet, daß ein Arbeitsspeicher (62) vorgesehen ist, in den die Straßen der Masche der errechneten Position und die Straßen der anliegenden Maschen aus dem Straßennetzspeicher (12) übertragbar sind.

## Claims

1. Process for determining the position of a land vehicle by acquiring and evaluating driving data such as route, driving direction and subsequent correction of the position calculated from the driving data by comparing a stored digitised road network with possible positions, the road network being digitised in the form of road sections, the digitised road network being divided up into meshes in a grid form, characterised in that in each mesh of the grid a specific number of a plurality of road sections is not exceeded, in that when comparing the position calculated from the driving data with the roads, only those roads are considered which are located in the mesh in which the calculated position of the land vehicle is situated, or in one of the adjacent meshes.

2. Process according to Claim 1, characterised in that when comparing the position calculated from the driving data with the road sections, a weighting is carried out for each road section.

3. Process according to Claim 2, characterised in that the weighting is determined by the distance of the calculated position from each individual road section and/or by comparing the road angle and/or the given driving direction.

4. Process according to Claim 2 or 3, characterised in that the weighting is carried out at regular intervals and the weightings are added.

5. Process according to one of Claims 2 to 4, characterised in that the calculated position is corrected to the road section which has the highest weighting.

6. Process according to one of Claims 2 to 4, characterised in that a correction of the calculated position to a road section is only performed if the weighting of the road section exceeds a predetermined value.

7. Process according to one of the preceding claims, characterised in that the size of the mesh is determined as a function of the number of roads (density of the roads).

8. Device for carrying out a process according to one of Claims 1 - 7 having a driving data generator (10), a first memory (12) for a digitised road network and a computer (14) for evaluating the driving data and subsequent correction of the position calculated from the driving data by compensating with the data of the stored digitised road network, characterised in that, in addition to the first memory (12) for the digitised road network, a further memory (16) is provided which, for each mesh of the grid, contains a list of the numbers of the roads of the road network which are located completely or partially within the respective meshes.

9. Device according to Claim 8, characterised in that the driving data generator (10) comprises a wheel sensor arrangement (18) for acquiring data on distance travelled and direction data and possibly a compass (20) for acquiring direction data.

10. Device according to one of Claims 8 or 9, characterised in that a third memory (22) for storing the weightings is provided.

11. Device according to one of Claims 8 - 10, characterised in that a working memory (62) is provided into which the roads of the mesh of the calculated position and the roads of the adjacent meshes can be transferred from the road network memory (12).

## Revendications

1. Procédé de détermination de la position d'un véhicule routier par saisie et traitement de données de conduite, telles que le trajet parcouru et la direction de circulation, et correction ultérieure de la position obtenue à partir des données de conduite par comparaison avec les positions possibles sur un réseau routier mémorisé de façon digitale, cette informatisation du réseau routier étant réalisée sous la forme de tronçons de route, et divisé en mailles sous la forme d'une grille, caractérisé en ce que, dans chaque maille de la grille, on ne peut dépasser un certain nombre de tronçons de plusieurs routes, et que, pour la comparaison entre la position calculée à partir des données de conduite et les routes, on ne prend en considération que les routes qui se trouvent dans la maille dans laquelle se situe la position calculée du véhicule routier ou dans une des mailles limitrophes.

2. Procédé selon la revendication 1, caractérisé en ce que, pour la comparaison entre la position calculée à partir des données de conduite et les tronçons de route, on procède à une pondération pour chaque tronçon de route.

3. Procédé selon la revendication 2, caractérisé en ce que la pondération est déterminée par l'écart entre la position calculée et chaque tronçon de route isolé et/ou par comparaison entre l'orientation de la route et/ou la direction de circulation.

4. Procédé selon la revendication 2 ou 3, caractérisé en ce que la pondération se fait à des intervalles de temps réguliers et que les pondérations sont additionnées.

5. Procédé selon l'une des revendications 2 à 4, caractérisé en ce que la position calculée est ramenée par correction sur la tronçon de route qui est affecté de la plus forte pondération.

6. Procédé selon l'une des revendications 2 à 4, caractérisé en ce que l'on ne procède à une correction de la position calculée pour la ramener sur un tronçon de route que quand la pondération du tronçon de route dépasse une valeur prédéterminée.

7. Procédé selon l'une des revendications ci-dessus, caractérisé en ce que la dimension des mailles est déterminée en fonction du nombre de routes (densité de routes).

8. Dispositif pour la mise en oeuvre d'un procédé défini par l'une des revendications 1 à 7, avec un générateur de données de conduite (10), une première mémoire (12) pour un réseau routier numérisé, ainsi qu'un calculateur (14) pour traitement des données de conduite et correction ultérieure de la position calculée à partir des données de conduite par comparaison avec les données stockées relatives au réseau routier, caractérisé en ce qu'à côté de la première mémoire (12) pour le réseau routier numérisé, on a prévu une autre mémoire (16) qui contient pour chaque maille de la grille une liste des numéros des routes du réseau routier qui s'y trouvent, totalement ou partiellement, à l'intérieur de chaque maille.

9. dispositif selon la revendication 8, caractérisé en ce que le générateur de données de conduite (10) se compose d'un dispositif de capteur de roue (18) pour saisie des tronçons de trajet et des données de direction, et le cas éup16 chéant d'un compas (20) pour saisie des données de direction.

10. Dispositif selon la revendication 8 ou 9, caractérisé en ce qu'on a prévu une troisième mémoire (22) pour stockage des pondérations.

11. Dispositif selon l'une des revendications 8 à 10, caractérisé en ce qu'il est prévu une mémoire de travail (62), dans laquelle on peut transférer depuis la mémoire du réseau routier (12) les routes de la maille de la position calculée et les routes des mailles limitrophes.

Fig.1 .

Start — 38

Initialisierung — 40

Speicher löschen — 42

Position aus Fahrdaten — 44

Position
in bisheriger
Masche? — 46

nein

ja

Liste relevanter Straßen
aktualisieren;Wichtungen
übernehmen

54

Straßenwichtung
Speicher zuschlagen

48

nein

Schwellwert? — 50

ja

Position korrigieren — 52

Fig.2

Fig.3

$K_2$
$9_6$
$9_4$
$9_5$
$9'_3$
$9_3$
$9'_2$
$9_2$
$9'_1$
$9_1$
$K_1$

Fig.4

66
68
20
18

64 Anzeige- und Bedienteil

Sensor-controller 70

10

56 Ein-Ausgabe-Schnittstelle

58 Speicher Betriebs-software

Komp.
Rechner 14

60

22 Bewertungs-speicher (3.Speicher)

Schwellwert-speicher(4.Sp) 24

Arbeits-speicher 62

16 Speicher Gitternetz (2.Speicher)

12 Speicher Straßennetz (1.Speicher)